# EUROPÄISCHE PATENTSCHRIFT

(11) **EP 1 773 616 B1**
(45) Veröffentlichungstag und Bekanntmachung des Hinweises auf die Patenterteilung: **23.09.2009**
(21) Anmeldenummer: 05774349.4
(22) Anmeldetag: 22.07.2005
(51) Int. Cl.: B60K 17/16, F16D 3/227, F16D 3/06

(54) **KEGELRAD-DIFFERENZIAL FÜR KRAFTFAHRZEUGE**
BEVEL WHEEL DIFFERENTIAL FOR MOTOR VEHICLES
DIFFERENTIEL A PIGNONS CONIQUES POUR VEHICULES A MOTEUR

(30) Priorität: 27.07.2004 DE 102004036333
(43) Veröffentlichungstag der Anmeldung: 18.04.2007
(73) Patentinhaber: AUDI AG, 85045 Ingolstadt (DE)
(72) Erfinder: MÄRKL, Johann, 85128 Nassenfels (DE); MEIXNER, Christian, 85049 Ingolstadt (DE)
(74) Vertreter: Lehle, Josef
(86) Internationale Anmeldenummer: PCT/EP2005/008025
(87) Internationale Veröffentlichungsnummer: WO 2006/010566

(56) Entgegenhaltungen:
- EP-A- 1 340 922
- AT-B- 284 644
- FR-A- 982 919
- US-A- 5 916 055

## Beschreibung

Die Erfindung betrifft ein Kegelrad-Differenzial für Kraftfahrzeuge gemäß dem Oberbegriff des Patentanspruches 1.

Ein derartiges Differenzial zeigt die US 5,916,055 A, bei dem die beiden ringförmigen Achskegelräder in dem mehrteiligen Ausgleichsgehäuse des Differenziales drehbar gelagert sind und in die Achskegelräder unmittelbar homokinetische Gelenke für den Abtrieb des Drehmomentes auf die Antriebswellen integriert sind. Die homokinetischen Gelenke sind somit mit dem Schmieröl des Differenziales geschmiert. Eine Demontage der Gelenke ist nur durch komplettes Zerlegen des Differenziales und des Ausgleichsgehäuses möglich.

Aufgabe der Erfindung ist es, ein Kegelrad-Differenzial der gattungsgemäßen Art vorzuschlagen, das fertigungstechnisch und baulich günstiger ist und eine einfachere Montage bzw. Demontage des homokinetischen Gelenkes ermöglicht.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass das homokinetische Gelenk ein Verschiebegelenk ist, das zumindest teilweise ohne Demontage des Differenziales montierbar bzw. demontierbar ist.

Zum Ausbau der Antriebswelle und des Verschiebegelenkes im Kraftfahrzeug ist der Gelenkstem des homokinetischen Verschiebegelenkes auf dem mit einer Keilverzahnung versehenen Abschnitt der abgehenden Antriebswelle verschiebbar angeordnet und mittels einer lösbaren Verbindung gehalten. Damit gelingt es selbst bei baulich beengten Verhältnissen, die Antriebswelle mit dem Gelenkstem und ggf. dem Gelenkaußenteil aus dem Differenzial heraus zu ziehen bzw. bei der Wiedermontage einzuführen.

Insbesondere kann das Achskegelrad einen zylindrischen Abschnitt aufweisen, der in einem Nabenabschnitt des einen Ausgleichsgehäuseteiles drehbar gelagert und über eine Axialsicherung gehalten ist und in dem mittelbar oder unmittelbar das Verschiebegelenk angeordnet ist. Dies ergibt eine in sich steife und laufruhige Führung des Achskegelrades im Ausgleichsgehäuse bei einer fertigungstechnisch günstigen Konstruktion.

Die Axialsicherung kann dabei durch einen Ringbund gebildet sein, der an den zylindrischen Abschnitt angeformt ist und der in eine entsprechende Ringnut des Ausgleichsgehäuses einragt.

Fertigungstechnisch besonders günstig kann der zylindrische Abschnitt mit dem Achskegelrad verschweißt sein. Dadurch können das Achskegelrad z.B. als Fließpressteil und der zylindrische Abschnitt spanend hergestellt und dann z.B. durch Laserschweißen miteinander verbunden sein.

Ferner kann bevorzugt der zylindrische Abschnitt des Achskegelrades den Nabenabschnitt des Ausgleichsgehäuseteiles axial überragen und mittels eines Wellendichtringes gegenüber dem Gehäuse abgedichtet sein. Damit ist in baulich einfacher Weise eine Abdichtung des Gehäuses des Differenziales nach außen geschaffen mit der Möglichkeit, das Gelenkinnere mit einem anderen Schmiermedium, z.B. einem hochwertigem Spezialfett, zu schmieren.

In weiterer vorteilhafter Ausbildung kann der zylindrische Abschnitt aus dem Gehäuse des Differenziales axial hervorragen und unmittelbar eine Staubschutzmanschette zur Abdichtung des homokinetischen Verschiebegelenkes tragen.

Des weiteren kann das Achskegelrad mit dem zylindrischen Abschnitt mit Bezug zum homokinetischen Verschiebegelenk öldicht ausgeführt sein, z.B. durch eine homogene Rundumschweißung zwischen dem zylindrischen Abschnitt und dem scheibenförmig geschlossenen Achskegelrad.

Besonders vorteilhaft kann ein separates Gelenkaußenteil des Verschiebegelenkes in den zylindrischen Abschnitt des Achskegelrades eingeschoben und drehmomentübertragend gehalten sein. Daraus resultiert der Vorteil, dass das gesamte Verschiebegelenk ohne jegliche Zerlegung des Differenziales montiert bzw. demontiert werden kann.

Dabei kann an dem Gelenkaußenteil ein mit einer Verzahnung versehener Zapfen angeformt sein, der in eine Innenverzahnung des Achskegelrades formschlüssig eingreift.

Ferner kann das Gelenkaußenteil mittels zumindest einem in Nuten des zylindrischen Abschnittes und des Gelenkaußenteiles geführten Sicherungsring axial gehalten sein; das Gelenk kann dann entweder durch Ausfedern des Sicherungsringes mittels eines Werkzeuges oder aber durch Aufbringen einer definierten Ausziehkraft demontiert werden.

Die lösbare Verbindung kann baulich besonders einfach ein in eine Nut der Antriebswelle eingesprengter Sicherungsring sein. Die lösbare Verbindung kann aber auch mittels einer Schraubverbindung hergestellt sein, mit einer Mutter, die auf ein Außengewinde auf der Antriebswelle aufgeschraubt ist.

Im Falle einer Steckverbindung zwischen dem Zapfen auf dem Gelenkaußenteil und dem Achskegelrad kann eine Öldichtheit zum Gelenkinneren mittels einem Abdeckblech hergestellt sein, das z.B. an dem Achskegelrad über einen Ringkragen gehalten ist.

Zwei Ausführungsbeispiele der Erfindung sind im folgenden mit weiteren Einzelheiten näher erläutert. Die schematische Zeichnung zeigt in:
- **Fig. 1**: einen senkrechten Längsschnitt durch ein teilweise dargestelltes Kegelrad-Differenzial für Kraftfahrzeuge, mit einem in ein Achskegelrad integrierten homokinetischen Verschiebegelenk; und
- **Fig. 2**: einen gleichen Längsschnitt durch ein Kegelrad-Differenzial gemäß Fig.1, jedoch mit einem in das Achskegelrad eingesteckten, separaten homokinetischen Verschiebegelenk.

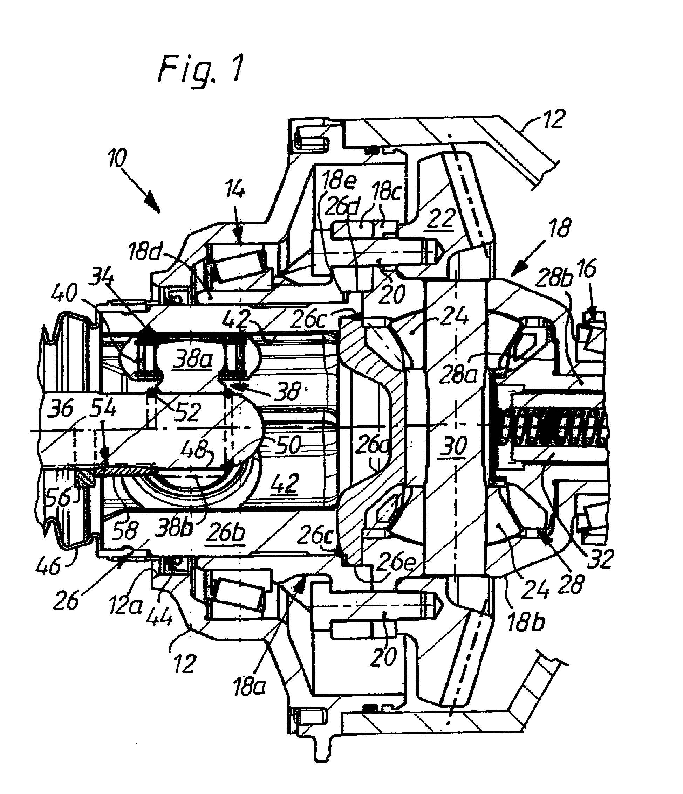

In der **Fig. 1** ist ein Kegelrad-Differenzial 10 für Kraftfahrzeuge teilweise dargestellt, das soweit nicht beschrieben herkömmlicher und dem Fachmann bekannter Bauart ist.

Das Differenzial 10 weist ein nur teilweise ersichtliches und allgemein mit 12 bezeichnetes Gehäuse auf, in dem über Kegelrollenlager 14, 16 ein Ausgleichsgehäuse 18 drehbar gelagert ist.

Das Ausgleichsgehäuse 18 ist im wesentlichen zweiteilig mit einem rotationssymetrischen Gehäuseteil 18a und einem Gehäuseteil 18b ausgeführt. Die Gehäuseteile 18a und 18b sind mittels Schrauben 20 miteinander und mit einem Tellerrad 22 fest verschraubt, wobei sich die Schrauben 20 durch Ringflansche 18c der Gehäuseteile 18a, 18b erstrecken und in entsprechende Gewindebohrungen des Tellerrades 22 eingeschraubt sind.

Innerhalb des Ausgleichsgehäuses 18 sind zwei Ausgleichskegelräder 24 und zwei Achskegelräder 26, 28 drehbar gelagert. Dabei sind die baugleichen Ausgleichskegelräder 24 auf einem Mitnehmerbolzen 30 angeordnet, der im Ausgleichsgehäuse 18 festgelegt ist.

Das Achskegelrad 28 ist im Gehäuseteil 18b des Ausgleichsgehäuses 18 über radiale Führungsflächen 28a und einen rohrförmigen Abschnitt 28b in herkömmlicher und deshalb nicht näher dargestellter Weise geführt, wobei das Abtriebsmoment über eine formschlüssig in den Abschnitt 28b eingesteckte Welle 32 ohne Zwischenschaltung eines Gelenkes (bei einer außermittigen Anordnung des Differenziales 10 mit einer Zwischenwelle und zwei seitlichen Antriebswellen) erfolgt.

Das Achskegelrad 26 hingegen ist über ein homokinetisches Verschiebegelenk 34 mit einer Antriebswelle 36 trieblich verbunden, die über ein weiteres, nicht dargestelltes Gelenk unmittelbar ein angetriebenes Rad des Kraftfahrzeuges antreibt.

Das Achskegelrad 26 setzt sich dabei aus dem im Querschnitt betrachtet etwa hutförmigen Kegelrad 26a und einem zylindrischen Abschnitt 26b zusammen, wobei der Abschnitt 26b zugleich das Gelenkaußenteil des Verschiebegelenks 34 darstellt. Die beiden Teile 26a, 26b sind mit einer umlaufenden Schweißnaht 26c öldicht miteinander verschweißt, wobei die Schweißnaht 26c achsparallel (obere Hälfte der Zeichnung **Fig. 1**) oder radial (untere Hälfte der Zeichnung **Fig. 1**) verlaufend und bevorzugt im Laserschweißverfahren hergestellt ist.

Der zylindrische Abschnitt 26b ist in dem Nabenabschnitt 18d des Gehäuseteiles 18a drehbar geführt und trägt einen Ringbund 26d als Axialführung, wobei der Ringbund 26d (obere Hälfte der Zeichnung **Fig. 1**) in eine in der Trennebene der beiden Gehäuseteile 18a, 18b des Ausgleichsgehäuses 18 eingearbeitete Ringnut 18e eingreift. Der besagte Ringbund 26d kann alternativ auch an das Kegelrad 26a als Ringbund 26e angeformt sein (vgl. untere Hälfte der Zeichnung **Fig. 1**).

Der zylindrische Abschnitt 26b überragt wie ersichtlich in axialer Richtung den Nabenabschnitt 18d des Gehäuseteiles 18a und das Gehäuse 12 des Differenziales 10 und wirkt abdichtend mit einem in die Durchtrittsöffnung 12a des Gehäuses 12 eingesetzten Wellendichtring 44 unmittelbar zusammen.

Ferner trägt der frei aus dem Gehäuse 12 ragende zylindrische Abschnitt 26b eine das Verschiebegelenk 34 nach außen abdichtende Staubschutzmanschette 46, die in nicht dargestellter Weise am anderen Ende die Antriebswelle 36 umschließt.

Das in das Ausgleichskegelrad 26 integrierte homokinetische Verschiebegelenk 34 (auch als Gleichlaufgelenk bezeichnet) kann soweit nicht beschrieben bekannter Bauart sein und weist einen Gelenkstern 38 mit mehreren radial nach außen abragenden Gelenkzapfen 38a auf, die über Gleitstücke 40 in entsprechende Längsnuten 42 einragen und somit im Betrieb sowohl Winkelausschläge als auch Längsverschiebungen der Antriebswelle 36 relativ zum Ausgleichskegelrad 26 ermöglichen.

Der Gelenkstem 38 ist über eine Keilverzahnung 48 auf der Antriebswelle 36 und in der Nabe 38b des Gelenksterns 38 in Drehrichtung formschlüssig gehalten, während als Axialsicherung auf der Zeichnung **Fig. 1** nach rechts (relativ zur Antriebswelle 36) ein in eine Ringnut der Antriebswelle 36 eingesprengter Sicherungsring 50 dient.

Als Axialsicherung in entgegengesetzter Richtung kann ebenfalls ein Sicherungsring 52 (obere Hälfte der Zeichnung **Fig. 1**) eingesetzt sein, der in eine entsprechende Ringnut der Antriebswelle 36 eingefedert ist, oder es kann eine Schraubverbindung 54 (untere Hälfte der Zeichnung) vorgesehen sein.

Die Schraubverbindung 54 setzt sich aus einem Außengewinde 36a auf der Antriebswelle 36 und einer aufgeschraubten Mutter 56 zusammen, wobei die Mutter 56 über eine Spannhülse 58 auf die Nabe 38b des Gelenkstems 38 wirkt. Die Mutter 56 kann durch geeignete Mittel, z.B. ein Sicherungsblech (nicht dargestellt), gegen Lösen gesichert sein.

Durch Abnehmen des Sicherungsringes 52 bzw. durch Lösen und Zurückschrauben der Mutter 56 kann bei abgezogener Staubschutzmanschette 46 von dem zylindrischem Abschnitt 26b der Gelenkstem 38 relativ zur Antriebswelle 36 auf der Zeichnung nach links verschoben werden, wodurch der Ausbau der Antriebswelle 36 mit dem Gelenkstern 38 und den Gleitstücken 40 bei beengten Bauraumverhältnissen im Kraftfahrzeug erleichtert ist.

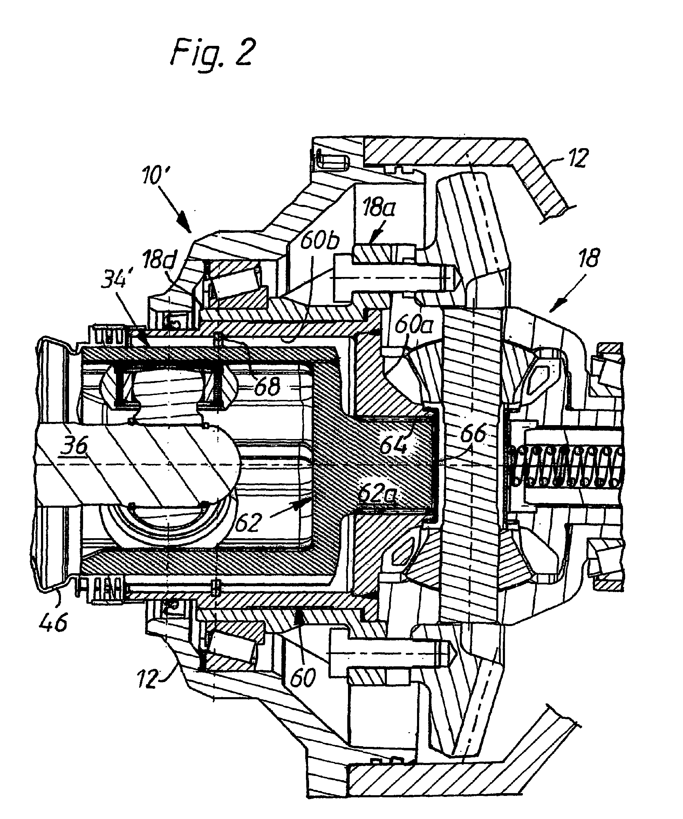

In der **Fig. 2** ist zur Vermeidung von Wiederholungen das Kegelrad-Differenzial 10' nur soweit beschrieben, als es sich wesentlich von dem Differenzial 10 der Fig. 1 unterscheidet. Gleiche Teile sind ggf. mit gleichen Bezugszeichen versehen.

Abweichend zur Fig. 1 ist in das Achskegelrad 60 in dessen zylindrischen Abschnitt 60b ein homokinetisches Verschiebegelenk 34' mit einem separaten Gelenkaußenteil 62 eingesetzt. Die Staubschutzmanschette 46 ist auf dem Gelenkaußenteil 62 in üblicher Weise befestigt.

Das Gelenkaußenteil 62 trägt ferner einen mit einer Steckverzahnung 64 versehenen Zapfen 62a, der in eine komplementäre Innenverzahnung des Kegelrades 60a des Achskegelrades 60 eingreift. Zur Herstellung einer Öldichtheit der Steckverzahnung 64 ist ein Abdeckblech 66 mit einem angeformten Ringkragen auf einen entsprechenden Absatz des Kegelrades 60a aufgesteckt.

Das glockenförmige Gelenkaußenteil 62 ist mittels eines federnden Sicherungsringes 68 axial in dem zylindrischen Abschnitt 60b festgelegt. Der Sicherungsring 68 greift dabei in entsprechende Ringnuten des Gelenkaußenteils 62 ein, wobei die sich ergebende Axialsicherung so ausgelegt ist, dass bei Aufbringen einer definierten Ausziehkraft (z.B. mittels eines Spezialwerkzeuges) auf das Verschiebegelenk 34' der Sicherungsring 68 aus einer der Ringnuten ausfedert und das Verschiebegelenk 34' aus dem Ausgleichskegelrad 60 (ggf. nach Lösen der Staubschutzmanschette 46) komplett herausziehbar ist.

Durch die gezeigte Anordnung und Abdichtung des Achskegelrades 26 (**Fig. 1**) bzw. des Achskegelrades 60 (**Fig. 2**) im Differenzial 10 bzw. 10' ist das Verschiebegelenk 34, 34' gegenüber dem Innenraum des Differenziales 10, 10' öldicht abgeschlossen, so dass unterschiedliche, den gegebenen tribologischen Anforderungen entsprechende Schmiermittel einsetzbar sind; z.B. für das Verschiebegelenk 34, 34' eine Dauerfettfüllung und für das Differenzial 10, 10' ein geeignetes Schmieröl.

Die Erfindung ist nicht auf die beschriebenen Ausführungsbeispiele beschränkt. So könnte auch das Achskegelrad 28 entsprechend dem Achskegelrad 26 bzw. 60 mit einem integrierten, homokinetischen Verschiebegelenk 34 bzw. 34' ausgeführt sein und die zweite Antriebswelle ohne Zwischenwelle 32 direkt vom Differenzial 10 bzw. 10' abgehen. Die Konstruktion könnte dabei im wesentlichen spiegelbildlich zu der dargestellten linken Seite des Differenziales 10 bzw. 10' sein, ggf. mit einem dann dreiteiligen Ausgleichsgehäuse 18.

## Patentansprüche

1. Kegelrad-Differenzial für Kraftfahrzeuge, mit einem in einem Gehäuse drehbar gelagerten Ausgleichsgehäuse (18), in dem miteinander in Eingriff befindliche Achskegelräder (26, 28) und Ausgleichskegelräder (24) gelagert sind und das Ausgleichsgehäuse (18) über ringförmige Flansche zweiteilig ausgeführt und zusammen mit einem antreibenden Tellerrad (22) verschraubt ist, wobei in zumindest einem Achskegelrad (26, 28) in einem zylindrischen Abschnitt (26b) des Achskegelrades ein homokinetisches Gelenk (34) für den Antrieb des Differenzials auf eine Antriebswelle (36) integriert ist, **dadurch gekennzeichnet, dass** das homokinetische Gelenk ein Verschiebegelenk (34; 34) mit einem Gelenkstern (38) ist, der auf dem mit einer Keilverzahnung (48) versehenen Abschnitt der abgehenden Antriebswelle (36) verschiebbar angeordnet und derart mittels einer lösbaren Verbindung (52, 54) gehalten ist, dass der Gelenkstern (38) durch Lösen der Verbindung (52, 54) relativ zur Antriebswelle (36) aus dem Differenzial (10) verschiebbar ist, so dass das Verschiebegelenk zumindest teilweise ohne Demontage des Differenzials (10; 10) montierbar bzw. demontierbar ist.

2. Differenzial nach Anspruch 1, **dadurch gekennzeichnet, dass** das Achskegelrad (26; 60) einen zylindrischen Abschnitt (26a; 60a) aufweist, der in einem Nabenabschnitt (18d) des einen Ausgleichsgehäuseteiles (18a) drehbar gelagert und über eine Axialsicherung (26e) gehalten ist und in dem mittelbar oder unmittelbar das Verschiebegelenk (34; 34') angeordnet ist.

3. Differenzial nach Anspruch 2, **dadurch gekennzeichnet, dass** die Axialsicherung durch einen Ringbund (26e) gebildet ist, der an den zylindrischen Abschnitt (26b) oder an das Kegelrad (26a) angeformt ist und der in eine entsprechende Ringnut (18e) des Ausgleichsgehäuses (18) einragt.

4. Differenzial nach einem oder mehreren der vorhergehenden Ansprüche, **dadurch gekennzeichnet, dass** der zylindrische Abschnitt (26b; 60b) mit dem korrespondierenden Kegelrad (26a; 60a) verschweißt ist.

5. Differenzial nach einem oder mehreren der vorhergehenden Ansprüche, **dadurch gekennzeichnet, dass** der zylindrische Abschnitt (26b; 60b) des Achskegelrades (26; 60) den Nabenabschnitt (18d) des Ausgleichsgehäuseteiles (18a) axial überragt und mittels eines Wellendichtringes (44) gegenüber dem Gehäuse (12) abgedichtet ist.

6. Differenzial nach einem oder mehreren der vorhergehenden Ansprüche, **dadurch gekennzeichnet, dass** der zylindrische Abschnitt (26b; 60b) aus dem Gehäuse (12) des Differenziales (10; 10') axial hervorragt und unmittelbar eine Staubschutzmanschette (46) trägt.

7. Differenzial nach einem oder mehreren der vorhergehenden Ansprüche, **dadurch gekennzeichnet, dass** das Kegelrad (26a; 60a) mit dem zylindrischen Abschnitt (26b; 60b) mit Bezug zum homokinetischen Verschiebegelenk (34; 34') öldicht ausgeführt ist.

8. Differenzial nach einem oder mehreren der vorhergehenden Ansprüche, **dadurch gekennzeichnet, dass** ein separates Gelenkaußenteil (62) des Verschiebegelenkes (34') in den zylindrischen Abschnitt (60b) des Achskegelrades (60) eingeschoben und drehmomentübertragend gehalten ist.

9. Differenzial nach Anspruch 8, **dadurch gekennzeichnet, dass** an dem Gelenkaußenteil (62) ein mit einer Steckverzahnung (64) versehener Zapfen (62a) angeformt ist, der in eine Innenverzahnung des Achskegelrades (60) formschlüssig eingreift.

10. Differenzial nach Anspruch 8 oder 9, **dadurch gekennzeichnet, dass** das Gelenkaußenteil (62) mittels zumindest einem in Ringnuten des zylindrischen Abschnittes (60b) und des Gelenkaußenteiles (62) geführten Sicherungsring (68) axial gehalten ist.

11. Differenzial nach Anspruch 11, **dadurch gekennzeichnet, dass** die lösbare Verbindung ein in eine Nut der Antriebswelle (36) eingesprengter Sicherungsring (52) ist.

12. Differenzial nach Anspruch 11, **dadurch gekennzeichnet, dass** die lösbare Verbindung mittels einer Schraubverbindung (54) hergestellt ist, mit einer Mutter (56), die auf ein Außengewinde (36a) auf dem Abschnitt der Antriebswelle (36) aufgeschraubt ist.

13. Differenzial nach Anspruch 9, **dadurch gekennzeichnet, dass** die Steckverbindung (64) zwischen dem Zapfen (62a) auf dem Gelenkaußenteil (62) und dem Kegelrad (60a) mittels einem Abdeckblech (66) öldicht abgeschlossen ist.

## Claims

1. Bevel wheel differential for motor vehicles with a differential housing (18) which is rotationally mounted in a housing and wherein axle bevel wheels (26, 28) and differential bevel wheels (24) are mounted such that they are in contact with each other, and the differential housing (18) is implemented, as a two-part component, by means of annular flanges , and is bolted to a driving crown gear (22), whereby a homokinetic joint (34) for the output of the differential is integrated onto a drive shaft (36) in a cylindrical section (26b) of the axle bevel wheel of at least one axle bevel wheel (26, 28), **characterized in that** the homokinetic joint is a displaceable link (34; 34) with a universal joint cross (38) that is disposed such that it can be displaced and supported, by means of a releasable connection (52, 54), on a section of the outward drive shaft (36) with splining (48), such that the universal joint cross (38), by releasing the connection (52, 54), can be displaced out of the differential (10) relative to the drive shaft (36), such that the displaceable link can at least partially be mounted or disassembled without disassembling the differential (10; 10).

2. Differential in accordance with claim 1, **characterized in that** the axle bevel wheel (26; 60) has a cylindrical section (26a; 60a), which is supported in a hub section (18d) of one differential housing section (18a) and is held by means of an axial securing means (26e), and in which the displaceable link (34; 34') is directly or indirectly disposed.

3. Differential in accordance with claim 2, **characterized in that** the axial securing means is formed by a collar (26e) that is formed on the cylindrical section (26b) or on the bevel wheel (26a) and that projects into a corresponding annular groove (18e) of the differential housing (18).

4. Differential in accordance with one or more of the preceding claims, **characterized in that** the cylindrical section (26b; 60b) is welded to the corresponding bevel wheel (26a; 60a).

5. Differential in accordance with one or more of the preceding claims, **characterized in that** the cylindrical section (26b; 60b) of the axle bevel wheel (26; 60) axially overhangs the hub section (18d) of the differential housing section (18a) and is sealed in relation to the casing (12) by means of a shaft seal ring (44).

6. Differential in accordance with one or more of the preceding claims, **characterized in that** the cylindrical section (26b; 60b) projects axially from the casing (12) of the differential (10; 10') and directly carries a dust cap (46).

7. Differential in accordance with one or more of the preceding claims, **characterized in that** the bevel wheel (26a; 60a) is, with the cylindrical section (26b; 60b), oil tight in relation to the displaceable homokinetic joint (34; 34').

8. Differential in accordance with one or more of the preceding claims, **characterized in that** a separate joint outer section (62) of the displaceable joint (34') is pushed into the cylindrical section (60b) of the axle bevel wheel (60) and is held such that it transmits torque.

9. Differential in accordance with claim 8**, characterized in that** a pin (62a) is formed on the joint outer section (62), and, having plug-in toothing (64), engages, form-locking, in inner toothing of the axle bevel wheel (60).

10. Differential in accordance with claims 8 or 9, **characterized in that** the joint outer section (62) is held, axially, by means of at least one securing ring (68) channelled into annular grooves of the cylindrical section (60b) and of the joint outer section (62).

11. Differential in accordance with claim 11, **characterized in that** the releasable connection is a securing ring (52) that is sprung into a groove in the drive shaft (36).

12. Differential in accordance with claim 11, **characterized in that** the releasable connection is effected by means of a bolt connection (54) with a nut (56) that is threaded onto an outer thread (36a) on the section of the drive shaft (36).

13. Differential in accordance with claim 9, **characterized in that** the pushfit (64) between the pin (62a) on the joint outer section (62) and the bevel wheel (60a) is closed off, such that it is oil-tight, by means of a cover plate (66).

## Revendications

1. Différentiel à pignons coniques pour véhicules à moteur, avec un boîtier de différentiel (18) logé de manière rotative dans un boîtier, dans lequel sont logés des pignons coniques planétaires (26, 28) et des pignons coniques satellites (24) se trouvant en prise l'un avec l'autre et le boîtier de différentiel (18) est réalisé en deux parties par le biais de collerettes annulaires et est vissé conjointement avec une couronne de différentiel (22) d'entraînement, un joint homocinétique (34) étant intégré pour l'entraînement du différentiel sur un arbre d'entraînement (36) dans au moins un pignon conique planétaire (26, 28) dans une section cylindrique (26b) du pignon conique planétaire, **caractérisé en ce que** le joint homocinétique est un joint coulissant (34 ; 34') avec un croisillon (38), qui est agencé de manière coulissante sur la section de l'arbre d'entraînement de sortie (36) dotée d'une denture en forme de clavette (48) et est maintenu au moyen d'une liaison amovible (52, 54) de telle sorte que le croisillon (38) peut être déplacé hors du différentiel (10) par rapport à l'arbre d'entraînement (36) par désolidarisation de la liaison (52, 54) de sorte que le joint coulissant puisse être monté ou démonté au moins en partie sans démontage du différentiel (10 ; 10').

2. Différentiel selon la revendication 1, **caractérisé en ce que** le pignon conique planétaire (26 ; 60) présente une section cylindrique (26a ; 60a) qui est logée de manière rotative dans une section de moyeu (18d) d'un des éléments du boîtier de différentiel (18a) et est maintenue par le biais d'un dispositif de sécurité axial (26e) et dans laquelle est agencé indirectement ou directement le joint coulissant (34 ; 34').

3. Différentiel selon la revendication 2, **caractérisé en ce que** le dispositif de sécurité axial est formé par un épaulement annulaire (26e), qui est formé sur la section cylindrique (26b) ou sur le pignon conique (26a) et qui pénètre dans une rainure annulaire (18e) correspondante du boîtier de différentiel (18).

4. Différentiel selon une ou plusieurs des revendications précédentes, **caractérisé en ce que** la section cylindrique (26b ; 60b) est soudée avec le pignon conique (26a ; 60a) correspondant.

5. Différentiel selon une ou plusieurs des revendications précédentes, **caractérisé en ce que** la section cylindrique (26b ; 60b) du pignon conique planétaire (26 ; 60) dépasse axialement de la section de moyeu (18d) de l'élément du boîtier de différentiel (18a) et est étanchée par rapport au boîtier (12) au moyen d'un joint d'arbre (44).

6. Différentiel selon une ou plusieurs des revendications précédentes, **caractérisé en ce que** la section cylindrique (26b ; 60b) dépasse axialement du boîtier (12) du différentiel (10 ; 10') et porte directement une manchette de protection anti-poussière (46).

7. Différentiel selon une ou plusieurs des revendications précédentes, **caractérisé en ce que** le pignon conique (26a ; 60a) avec la section cylindrique (26b ; 60b) est réalisé de manière étanche à l'huile par rapport au joint homocinétique coulissant (34 ; 34').

8. Différentiel selon une ou plusieurs des revendications précédentes, **caractérisé en ce qu'**une partie extérieure de joint séparée (62) du joint coulissant (34') est insérée dans la section cylindrique (60b) du pignon conique planétaire (60) et est maintenue de manière à transmettre le couple.

9. Différentiel selon la revendication 8, **caractérisé en ce qu'**un tenon (62a) doté d'une denture enfichable (64), qui prend dans une denture intérieure du pignon conique planétaire (60) par correspondance de forme, est formé sur la partie extérieure de joint (62).

10. Différentiel selon la revendication 8 ou 9, **caractérisé en ce que** la partie extérieure de joint (62) est maintenue axialement à l'aide d'au moins un circlip (68) guidé dans des rainures annulaires de la section cylindrique (60b) et de la partie extérieure de joint (62).

11. Différentiel selon la revendication 1, **caractérisé en ce que** la liaison amovible est un circlip (52) enfoncé dans une rainure de l'arbre d'entraînement (36).

12. Différentiel selon la revendication 1, **caractérisé en ce que** la liaison amovible est établie à l'aide d'une liaison vissée (54), avec un écrou (56) qui est vissé sur un filetage extérieur (36a) sur la section de l'arbre d'entraînement (36).

13. Différentiel selon la revendication 9, **caractérisé en ce que** la liaison par enfichage (64) entre le tenon (62a) sur la partie extérieure de joint (62) et le pignon conique (60a) est fermée de manière étanche à l'huile au moyen d'une tôle de recouvrement (66).
